# EUROPEAN PATENT APPLICATION

(11) **EP 1 956 727 A1**
(43) Date of publication of application: **13.08.2008**
(21) Application number: 07002700.8
(22) Date of filing: 08.02.2007
(51) Int. Cl.: H04B 3/54

(54) **Plug-and-play network, digital image display apparatus, and image monitoring system**

(71) Applicant: D-Link Corporation, Neihu District Taipei City (TW)
(72) Inventor: Kao, Ken, Taipei City (TW)
(74) Representative: Haft, von Puttkamer, Berngruber

(57) **Abstract**

The present invention discloses a plug-and-play network digital image display apparatus plugged into an existing power socket at home or office through a built-in or external powerline to Ethernet adapter and connected to a webcam through a powerline installed at home or office, so that the webcam in a certain room can send captured video and audio signals to the network digital image display apparatus in another room through the powerline, and the network digital image display apparatus plays the image and sound, without the need of installing an additional network cable to achieve the plug-and-play function at the power socket for the environmental dynamic monitoring function. The invention also discloses a plug-and-play image monitoring system, such that a user situated at a place other than a home or an office still can use a personal computer to monitor the home or office through the Internet.

## Description

### FIELD OF THE INVENTION

The present invention relates to a plug-and-play network digital image display apparatus and an image monitoring system.

### BACKGROUND OF THE INVENTION

Since 1980, many companies have started researching and developing powerline communication (PLC), which was used at an early stage for the remote control of light, water, electricity and security related home electric appliances as well as voice communication. A PLC system is divided into two main types: an access PLC and an in-house PLC according to the way of their connection with a backbone network. The access PLC refers to the PLC technology of connecting a home network to an outdoor backbone network, and the in-house PLC refers to other network technologies such as ADSL for connecting a home network that adopts the PLC technology with an outdoor backbone network, and the applications of the in-house PLC varies with the type of system and the bandwidth of the network. A narrowband is applicable in the areas of controlling automated electric appliances and instrumental meters, and such technology has a history of approximately one to two decades, and a wideband is applicable in the areas of networking, sharing computer resources and transmitting audio/video data.

At present, electric companies in more than forty countries of the world have started development plans of the PLC technology, and particularly in European countries, most of the buildings are constructed by stones, and Europeans do not want to destroy the stone structure or ruin the overall artistic look of their buildings, and thus they are not willing to install network cables to these buildings. For instance, the popularity of the fixed network in the main districts of Mid-Europe is only 20%, which is a major obstacle to the development of ADSL wideband services. However, the popularity of powerline network in these European countries reaches almost 100%, which is advantageous for providing wideband services by PLC, and thus European countries generally started their research and development of PLC technology earlier than other countries, and also invested more time, professional manpower, and capital. Regardless of the access PLC technology or the in-house PLC technology, European countries lead other countries of the world.

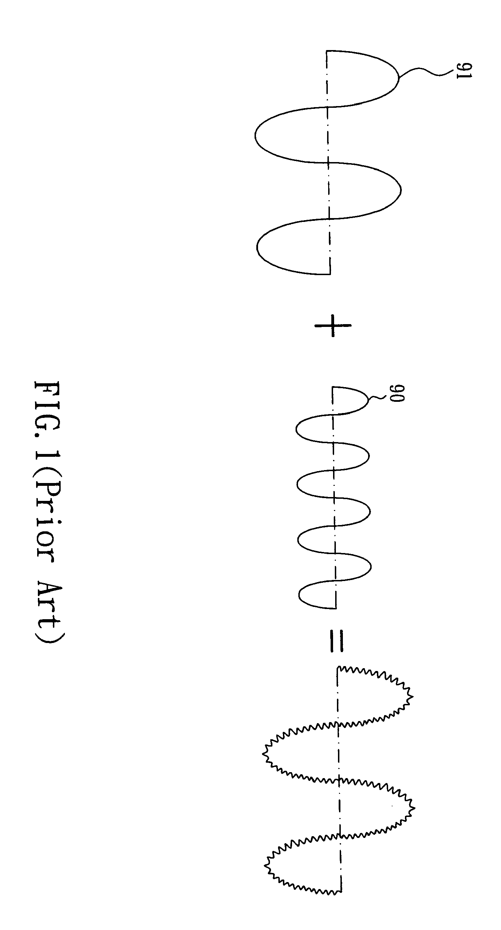

Referring to FIG 1, the operation principle of PLC is to stack a low-power signal 90 on an AC power waveform 91 and send out the low-power signal 90 through the power circuit, so that the power circuit is converted into a communication network. To ensure the coexistence and decoupling of the low-power signal and the power waveform, the frequency adopted for the PLC narrowband low-power signal is approximately 3-148.5KHz, and the frequency adopted for the PLC wideband low-power signal is approximately 1~30MHz, and thus these frequencies can be distinguished and decoupled easily from the frequency of 50Hz or 60Hz adopted by the power waveform. Since the PLC technology uses an existing power circuit for transmitting low-power signals 90, therefore the PLC technology has an advantage over the development and application of other cable wideband communication, since the PLC technology requires no installation of network cables, and its disadvantage resides on that a powerline is different from a data communication line, and thus the data transmitted through the powerline will be affected by external noises much easier than that of the data communication line during data transmissions and the attenuation of circuits and signals will be affected more significantly. Furthermore, various different electric appliances connected to the powerline have different impedances, and thus the powerline always shows a changing impedance when the electric appliances are turned on or off, and the level of difficulty for transmitting data correctly is increased.

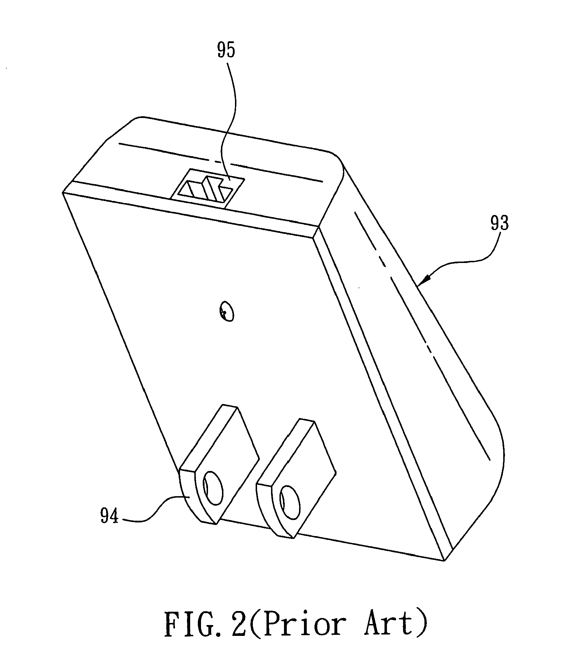

In recent years, a powerline is used for a cable network, which is called "Homeplug transmission technology" and becomes increasingly mature day after day, and such transmission technology is mainly applied to the information and communication appliances for a home network and existed in the model of an external adapter or a built-in module. Since the specification of the connectors of the adapter can be divided into two types: Ethernet and USB, and the Ethernet is used extensively at present. Intellon, a leading U.S. chip manufacturer, performed a test for the HomePlug transmission technology for more than 500 American families, and the test result shows that its coverage can reach up to 99%. In other words, 99% of the power sockets at a household can receive the Homeplug 1.0 signals, showing that the PLC technology is a feasible communication technology. In recent years, many manufacturers designed and developed a powerline to Ethernet adapter 93 for various different homes and small offices based on the HomePlug 1.0 transmission technology. Referring to FIG. 2, a power plug 94 and an Ethernet socket 95 (such as a RJ-45 socket) can be used to build an area network through an existing power circuit at home or small office of the same power loop, and its transmission rate generally reaches 85Mbps and comes with a protection function of data encryption. As to home or small office users, the powerline to Ethernet adapter 93 has provided the most convenient and safe method for the construction of area networks, such that the coverage of area network can be extended effectively to all places at home or small office of the same power loop. In other words, the issues of a difficult cable layout and an incapability of wireless network to cover several floors of a home or a small office can be overcome by using the existing power circuit in a building to create a complete home or office network through the powerline to Ethernet adapter 93 only, without the need of installing an additional network cable. In general, a user simply inserts the powerline to Ethernet adapter 93 into a power plug to convert the powerline in a building into a high-speed safe network architecture immediately, if the powerline to Ethernet adapter 93 is used for constructing a network, so that the user can logon a network safely through the powerline or sends personal or confidential data through the network, no matter in which room the user is situated.

In the society of these days, many couples of a family have to work and make a living for the basic living requirements, and also have to take care of their children and parents after work, and thus many couples install a webcam at each room of their children and parents to facilitate monitoring and taking care of the daily life of their children and parents through the computer. To achieve this objective, it is necessary to install a network cable and a webcam for each room of the children and parents again, such that video and audio signals captured by the webcam can be sent to the computer at the room of the couple through the network cables. However, our daily life is dynamic, and thus the space for our movements is not fixed, but it varies with time. Sometimes, a person is doing laundry at a laundry room, cooking in a kitchen, or listening to the music in a living room. Therefore, the expected monitoring effect cannot be maximized, because the installations of a webcam and a computer are limited by their fixed installation environment. As a result, more expenses and time are needed to install complicated network cables, and add webcams and computers to extend the monitoring range to cover each room, and such arrangement cannot be popularized among general consumers. Therefore, it is an important issue for manufacturers to find a way of using an existing power circuit at home or small office, a very low equipment cost and a very simple system architecture to develop a network digital image display apparatus and an image monitoring system to achieve a plug-and-play image monitoring function, while the PLC technology becomes increasingly mature.

### SUMMARY OF THE INVENTION

In view of the foregoing shortcomings of the conventional monitoring system, the inventor of the present invention based on years of experience in the related industry to conduct extensive researches and experiments, and finally developed a plug-and-play network digital image display apparatus and an image monitoring system in accordance with the present invention in hope of using the network digital image display apparatus to receive video and audio signals captured by a webcam through an existing power socket at home or office and an installed powerline and play the signals to achieve the plug-and-play image monitoring function, without the need of installing the network cable and set the computer again.

It is a primary objective of the present invention to provide a plug-and-play network digital image display apparatus, and the network digital image display apparatus is plugged into an existing power socket at home or office through a built-in or external powerline to Ethernet adapter, and connected to a webcam through a powerline installed at home or office. Therefore, a webcam in a certain room can send the captured video and audio signals to the network digital image display apparatus in another room through the powerline, and the network digital image display apparatus plays the image and sound, without the need of installing additional network cables, so as to achieve the plug-and-play function at the power socket for the environmental dynamic monitoring function.

Another objective of the present invention is to install memory card interface to the network digital image display apparatus for reading a digital image stored in a memory card of a digital camera, and display the digital image on the network digital image display apparatus as an electronic frame for the home decoration and environmental beautification purposes.

A further objective of the present invention is to provide a plug-and-play image monitoring system comprised of the network digital image display apparatus and a webcam, and the system further comprises a router with an end connected to the Internet and another end plugged into an existing power socket at home or office through a powerline to Ethernet adapter, so that a user situated at a place other than home or office still can use a personal computer to monitor a home or an office through the Internet, provided that the router and an installed powerline at home or office are connected to the webcam.

Another further objective of the present invention is to provide a system that further comprises a network digital video recorder coupled to the router, for receiving video and audio signals from the webcam through the router, and recording and saving the video and audio signals into the network digital video recorder for future reviews or reviewed through the network digital image display apparatus.

To make it easier for our examiner to understand the objective, technical characteristics and effects of the present invention, preferred embodiment will be described with accompanying drawings as follows:

### BRIEF DESCRIPTION OF THE DRAWINGS

FIG. 1 is a schematic view of a waveform of a low-power signal being stacked onto AC power;
FIG. 2 is a perspective view of a traditional powerline to Ethernet adapter;
FIG. 3 is a schematic circuit block diagram of a network digital image display apparatus in accordance with a first preferred embodiment of the present invention;
FIG. 4 is a schematic circuit block diagram of a network digital image display apparatus in accordance with a second preferred embodiment of the present invention;
FIG. 5 is a schematic view of a plug-and-play image monitoring system architecture in accordance with a third preferred embodiment of the present invention;
FIG. 6 is a schematic circuit block diagram of a webcam in accordance with a third preferred embodiment of the present invention; and
FIG. 7 is a schematic circuit block diagram of a webcam in accordance with a third preferred embodiment of the present invention.

### DETAILED DESCRIPTION OF THE PREFERRED EMBODIMENTS

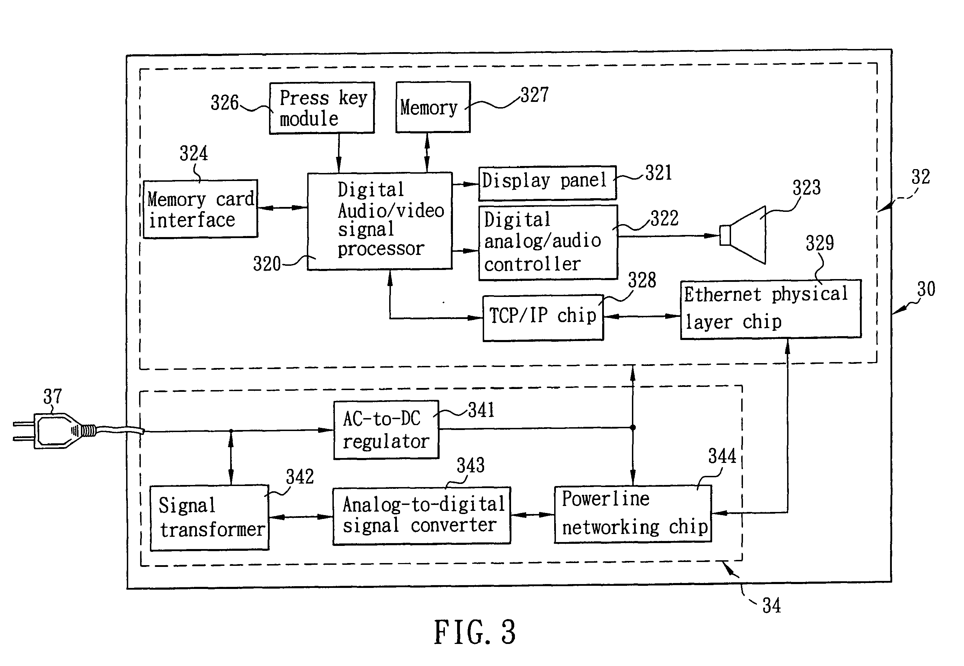

Referring to FIG. 3 for a plug-and-play network digital image display apparatus and an image monitoring system in accordance with a first preferred embodiment of the present invention, the network digital image display apparatus 30 comprises a display module 32 and a built-in Ethernet to powerline adapter 34, and the display module 32 is provided for playing a received digital audio/video data stream and comprises a digital audio/video signal processor 320, a display panel 321 (such as an LCD panel), a digital analog/audio controller 322, a speaker 323, a memory card interface 324, a press key module 326, a memory 327, a TCP/IP (Transmission Control Protocol/Internet Protocol) chip 328 and an Ethernet physical layer chip 329, wherein the digital audio/video signal processor 320 processes a received digital audio/video data stream, and the digital image is displayed on the display panel 321; and after a received digital sound is processed, the signal is converted by the digital analog/audio controller 322 and played from the speaker 323; the memory card interface 324 is inserted into a memory card (not shown in the figure), so that the digital audio/video signal processor 320 can read a digital image stored in the memory card and display the digital image on the display panel 321, and the network digital image display apparatus 30 serves as an electronic frame; the press key module 326 is coupled to the digital audio/video signal processor 320 and provided for users to input an operation instruction; the memory 327 is coupled to the digital audio/video signal processor 320 for buffering an instruction and a data required for the operation of the digital audio/video signal processor 320; an end of the TCP/IP chip 328 is coupled to the digital audio/video signal processor 320, and the other end of the TCP/IP chip 328 is coupled to the Ethernet physical layer chip 329, and the Ethernet physical layer chip 329 is connected directly to the Internet or other network device (such as a router), so that the Ethernet physical layer chip 329 and a received network packet can be transmitted to the digital audio/video signal processor 320 through the TCP/IP chip 328. It is noteworthy to point out that the TCP/IP chip 328 of the first embodiment comprises a Transmission Control Protocol (TCP) and an Internet Protocol (IP), so that the network digital image display apparatus 30 can be used for connecting the Internet or other network device (such as a router) to receive and play the digital video and audio signals transmitted from the Internet or other network device through the Ethernet physical layer chip 329, without the need of a support of any computer operating system.

In the first preferred embodiment as shown in FIG 3, the built-in Ethernet to powerline adapter 34 comprises an AC-to-DC regulator 341, a signal transformer 342, an analog-to-digital signal converter 343 and a powerline networking chip 344, wherein the AC-to-DC regulator 341 and the signal transformer 342 are connected separately to a power plug 37, such than when the power plug 37 is plugged into an existing power socket at home or office, the power transmitted from the power socket can be received; the AC-to-DC regulator 341 converts an AC power transmitted from the power socket into a DC power, and provides the DC power to each chip and component of the network digital image display apparatus 30 for normal operations; the signal transformer 342 decouples the low-power signal carried in the AC power, and the analog-to-digital signal converter 343 converts the low-power analog signal into a digital signal, and the powerline network chip 344 converts the digital signal into a network packet, and sends the network packet to the Ethernet physical layer chip 329. If the power plug 37 is plugged into an existing power socket at home or office, the network digital image display apparatus 30 can use the powerline installed at home or office to connect a webcam, so that the webcam in a certain room can capture video and audio signals to be transmitted to a network digital image display apparatus 30 in another room through the powerline, and the digital image and sound captured by the webcam can be played through the network digital image display apparatus 30, so as to achieve a plug-and-play environmental dynamic monitoring function at the power socket without requiring an additional network cable.

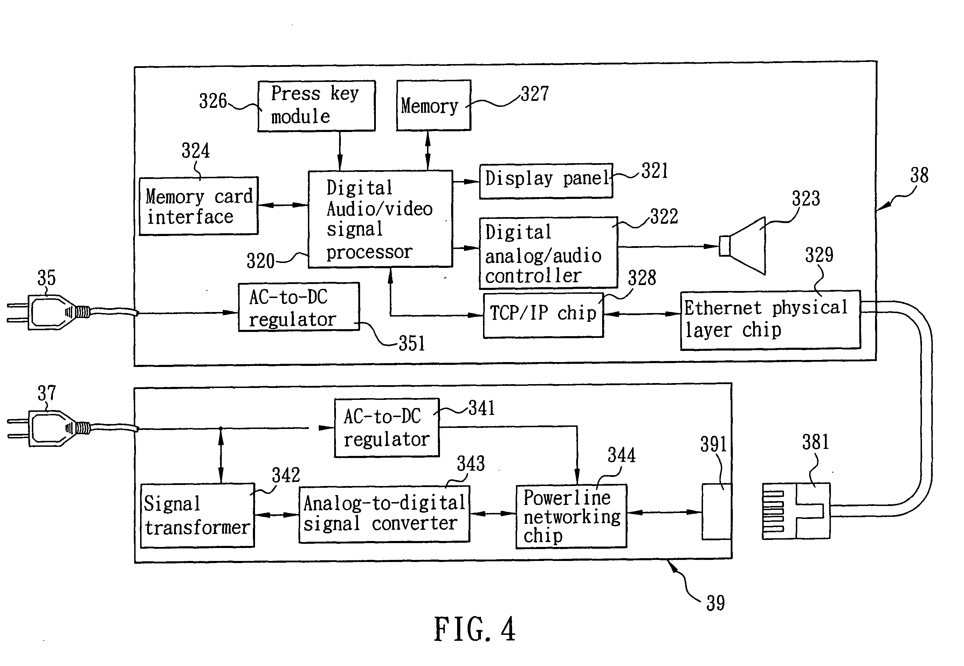

However, the present invention is not limited to the aforementioned arrangement. Referring to FIG. 4 for a second preferred embodiment of the present invention, the network digital image display apparatus 38 comprises an AC-to-DC regulator 351, a digital audio/video signal processor 320, a display panel 321, a digital analog/audio controller 322, a speaker 323, a memory card interface 324, a press key module 326, a memory 327, a TCP/IP chip 328 and an Ethernet physical layer chip 329, wherein an end of the AC-to-DC regulator 351 has a power plug 35, for converting an AC power transmitted from the power plug 35 into a DC power, and providing the DC power to other chips and components in the network digital image display apparatus 38 for their use; the digital audio/video signal processor 320 displays a received digital image on the display panel 321, such that a received digital sound is processed, converted by the digital analog/audio controller 322, and played by the speaker 323; the memory card interface 324 is provided for inserting a memory card, such that the digital audio/video signal processor 320 can read a digital image stored in the memory card, and display the digital image on the display panel 321; the press key module 326 and the memory 327 are coupled separately to the digital audio/video signal processor 320, and provided for a user to input an operation instruction and buffer an instruction and a data required for the operation of the digital audio/video signal processor 320; the TCP/IP chip 328 is coupled separately to the Ethernet physical layer chip 329 and the digital audio/video signal processor 320, such that the Ethernet physical layer chip 329 is coupled directly to the Internet or other network device (such as a router) through a RJ-45 plug 381, for receiving digital video and audio signals transmitted from the Internet or other network device, and transmitting the signals to the digital audio/video signal processor 320 for the display. In a second preferred embodiment as shown in FIG. 4, the RJ-45 plug 381 is inserted into an external Ethernet to powerline adapter 39, and the external Ethernet to powerline adapter 39 comprises a RJ-45 socket 391, an AC-to-DC regulator 341, a signal transformer 342, an analog-to-digital signal converter 343 and a powerline network chip 344, wherein the RJ-45 socket 391 is coupled to the RJ-45 plug 381, for transmitting a network packet received from the power socket to the network digital image display apparatus 38 by the external Ethernet to powerline adapter 39; the AC-to-DC regulator 341 converts an AC power transmitted from the power socket into a DC power, and provides the DC power to the powerline network chip 344 for its use; the signal transformer 342 decouples a low-power signal carried in the AC power, and the analog-to-digital signal converter 343 converts a low-power analog signal into a digital signal, and the powerline network chip 344 converts a network packet and transmits the network packet to the Ethernet physical layer chip 329 through the RJ-45 socket 391 and RJ-45 plug 381. Therefore, the network digital image display apparatus 38 receives video and audio signals captured by a webcam in a certain room through the powerline, and plays the signals to achieve a plug-and-play environmental dynamic monitoring function. It is noteworthy to point out that the AC-to-DC regulator 351 and the power plug 35 as described in the second preferred embodiment as shown in FIG. 4 are skipped and substituted by the RJ-45 socket 391 for providing a DC power produced by the AC-to-DC regulator 341 to the network digital image display apparatus 38.

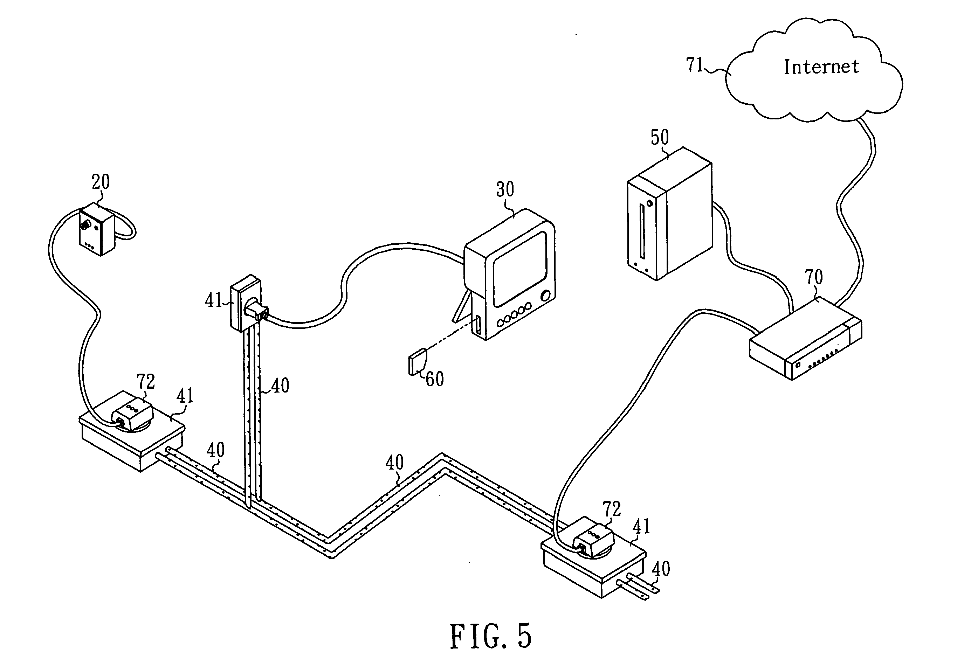

In a third preferred embodiment of the present invention, a powerline installed at home or office connects the network digital image display apparatus with a webcam to constitute an image monitoring system. In FIG. 5, the system 10 comprises a webcam 20 and a network digital image display apparatus 30, wherein the webcam 20 and the network digital image display apparatus 30 are plugged to the existing power socket at home or office 41 through a built-in Ethernet to powerline adapter 34 (as shown in FIG. 3) or external Ethernet to powerline adapter 72, or connected with each other by using a powerline 40 installed at home or office, such that the video and audio signals captured by the webcam 20 can be transmitted to the network digital image display apparatus 30 through the powerline 40 and played by the network digital image display apparatus 30, so as to achieve a plug-and-play mage monitoring function at the power socket 41 successfully without requiring the installation of an additional network cable. If at least one memory card interface 324 (as shown in FIG 4) of the network digital image display apparatus 30 is plugged into the power socket 41, a digital image stored in a memory card 60 of a general digital camera can be displayed as an electronic frame served for the objective of decorating home spaces and beautifying home environment. Further, the system 10 further comprises a router 70 with an end coupled to the Internet 71 and another end plugged into an existing power socket at home or office 41 through an external Ethernet to powerline adapter 72, so that a user situated at an environment other than a home or an office still can use the personal computer, and connect the webcam 20 through the powerline 40 installed at home or office to monitor the dynamic situation at home or office through the Internet 71 by the router 70, or a digital audio/video data stream transmitted from the Internet 71 through the router 70 is received and played by the network digital image display apparatus 30. In addition, the system 10 further comprises a network digital video recorder 50, and the network digital video recorder 50 can be coupled directly to the Internet or other network device (such as a router) without a support of any computer operating system, such that after the network digital video recorder 50 is connected with the router 70, the webcam 20 sends video and audio signals to the network digital video recorder 50 through the router 70, and stores the video and audio signals for future review.

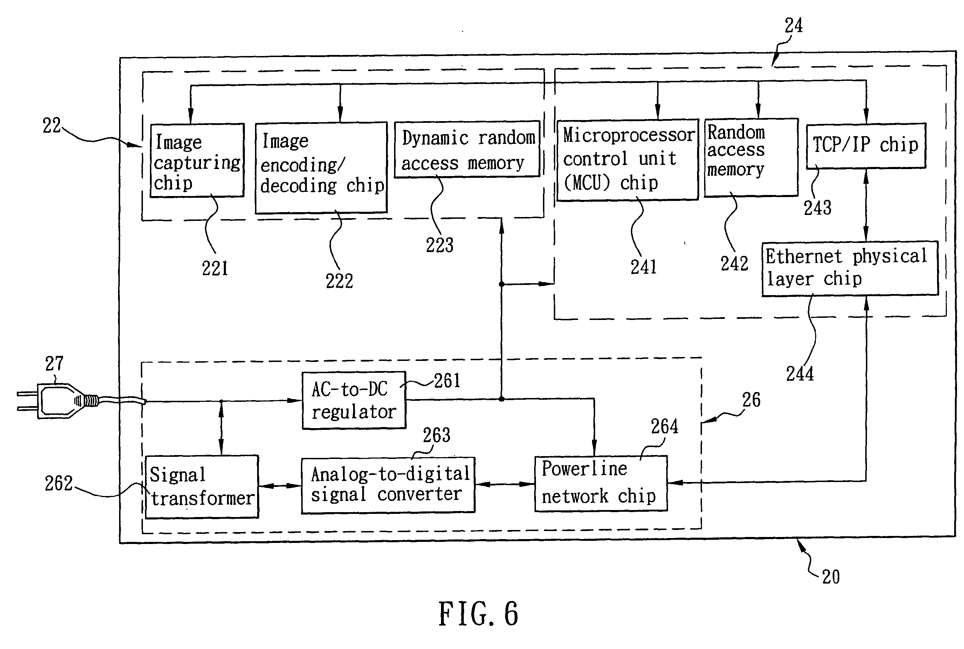

In a third preferred embodiment as shown in FIGS. 5 and 6, the webcam 20 comprises a camera module 22 and a control module 24, the camera module 22 is provided for capturing image and sound, and encoding the image and sound into a digital audio/video data stream of a predetermined format (such as the JPEG format), and the camera module 22 further comprises an image capturing chip 221 (such as a CMOS camera chip), an image encoding/decoding chip 222 (such as a MJPEG CODEC chip) and a dynamic random access memory (DRAM) 223, wherein the image capturing chip 221 converts a captured image into a signal with a YUV format and transmits the signal to the image encoding/decoding chip 222, and the image encoding/decoding chip 222 encodes and processes the signal into a digital audio/video data stream of a predetermined format (such as the JPEG format), and buffers the digital audio/video data stream into the dynamic random access memory 223; the control module 24 is provided for initializing an internal registry of the image capturing chip 221, and transmitting the setting information of a specified format of the digital audio/video data stream to the image encoding/decoding chip 222, and completing the connection directly to the Internet without the need of a support of any computer operating system, and the control module 24 comprises a microprocessor control unit (MCU) chip 241, a random access memory 242, a TCP/IP chip 243 and an Ethernet physical layer chip 244, wherein the random access memory 242 is provided for buffering an instruction and a data required for the operation of the webcam 20, and the MCU chip 241 is provided for controlling the whole operation of the webcam 20, and reading a digital audio/video data stream in the dynamic random access memory 223, and then converting the digital audio/video data stream into a network packet to be sent out through the TCP/IP chip 243 and Ethernet physical layer chip 244. It is noteworthy to point out that the TCP/IP chip 243 comprises a Transmission Control Protocol (TCP) and an Internet Protocol (IP), so that the webcam 20 can be coupled to the Internet or other network device through the Ethernet physical layer chip 244 without a support of any computer operating system for sending out a captured digital audio/video data stream.

Referring to FIGS. 5 and 6, the webcam 20 further comprises a built-in Ethernet to powerline adapter 26, and the Ethernet to powerline adapter 26 comprises an AC-to-DC regulator 261, a signal transformer 262, an analog-to-digital signal converter 263 and a powerline network chip 264, and the AC-to-DC regulator 261 and the signal transformer 262 are coupled separately to a power plug 27, such that if the power plug 27 is plugged into an existing power socket at home or office 41, the AC power transmitted from the power socket 41 can be received. The AC-to-DC regulator 261 is provided for transmitting and converting an AC power transmitted from the power socket 41 into a DC power, and providing the DC power to each chip and component of the webcam 20 for a normal operation; the powerline networking chip 264 is coupled to the Ethernet physical layer chip 244 for receiving a network packet transmitted from the Ethernet physical layer chip 244. After the network packet is digitized and processed, the network packet is sent to the analog-to-digital signal converter 263, and the analog-to-digital signal converter 263 converts a digital signal into a low-power analog signal, and the signal transformer 262 stacks or couples the low-power analog signal to an AC power waveform, and sends out the low-power analog signal through a powerline installed at home or office. If the power plug 27 is plugged into an existing power socket at home or office 41, the webcam 20 can be connected separately to the network digital image display apparatus 30 and the router 70 by the installed powerline 40.

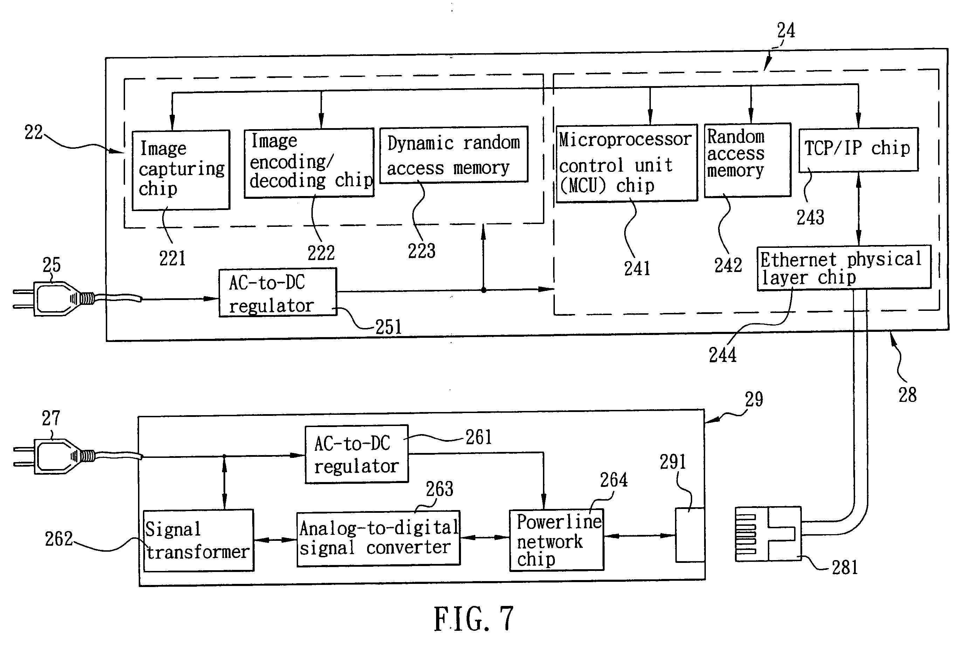

In summation of the description above, the invention is not limited to the foregoing preferred embodiment only. In a fourth preferred embodiment as shown in FIGS. 5 and 7, the webcam 28 comprises a camera module 22, a control module 24 and an AC-to-DC regulator 251, wherein an end of the AC-to-DC regulator 251 installs a power plug 25, for converting an AC power transmitted from the power plug 25 into a DC power, and providing the DC power to the camera module 22 and the control module 24 for their use; the camera module 22 comprises an image capturing chip 221, an image encoding/decoding chip 222 and a dynamic random access memory 223, wherein the image capturing chip 221 converts a captured image into a signal of a YUV format, and transmits the signal to the image encoding/decoding chip 222, and the image encoding/decoding chip 222 encodes and processes the signal into a digital audio/video data stream of a predetermined format, and buffers the digital audio/video data stream into the dynamic random access memory 223; the control module 24 comprises a MCU chip 241, a random access memory 242, a TCP/IP chip 243 and an Ethernet physical layer chip 244, wherein the random access memory 242 is provided for buffering an instruction and a data required for the operation of the webcam 28, and the MCU chip 241 is provided for controlling the overall operation of the webcam 28, and reading a digital audio/video data stream in the dynamic random access memory 223, and then converting the digital audio/video data stream into a network packet through the TCP/IP chip 243 and the Ethernet physical layer chip 244, and sending out the network packet through a network plug 281 (such as a RJ-45 plug). In a fourth preferred embodiment as shown in FIG. 7, the network plug 281 is plugged into an external Ethernet to powerline adapter 29, and the Ethernet to powerline adapter 29 comprises a network socket 291 (such as a RJ-45 socket), an AC-to-DC regulator 261, a signal transformer 262, an analog-to-digital signal converter 263 and a powerline networking chip 264, wherein the network socket 291 is coupled to the network plug 281 for receiving a network packet transmitted from the webcam 28, and the AC-to-DC regulator 261 converts an AC power transmitted from the power socket into a DC power, and provides the DC power to the powerline networking chip 264 for its use; the powerline networking chip 264 is coupled to the network socket 291 for receiving a network packet, such that after the network packet is digitized and processed, the analog-to-digital signal converter 263 converts the digital signal into a low-power analog signal, and the signal transformer 262 stacks or couples the low-power analog signal to an AC power waveform. A powerline 40 installed at home or office is used for transmitting the low-power analog signal separately to the network digital image display apparatus 30 and the router 70. It is noteworthy to point out that the AC-to-DC regulator 251 and the power plug 25 can be skipped in a fourth preferred embodiment of the present invention as shown in FIG. 7, and substituted by the RJ-45 socket 291 for providing the DC power produced by the AC-to-DC regulator 261 to the webcam 28.

In addition, it is noteworthy to point out that the webcam of the foregoing embodiment is an independent device, but the present invention is not limited to such arrangement. The webcam can be integrated with a lamp or any other home electric appliance, such that after the lamp or the home electric appliance is plugged into an existing power socket at home or office, the webcam can be connected separately to the network digital image display apparatus and the router through a powerline installed at home or office to achieve a plug-and-play image monitoring function at a power socket.

## Claims

1. A network digital image display apparatus, comprising:
an Ethernet physical layer chip, for receiving a network packet;
a TCP/IP chip, coupled to said Ethernet physical layer chip, for receiving a network packet transmitted from said Ethernet physical layer chip, and
processing said network packet based on a Transmission Control Protocol (TCP) and an Internet Protocol (IP);
a digital audio/video signal processor, coupled to said TCP/IP chip, for receiving and processing a digital audio/video data stream transmitted from said TCP/IP chip;
a display panel, coupled to said digital audio/video signal processor, for displaying a received digital image;
a digital analog/audio controller, coupled to said digital audio/video signal processor, for converting a received digital audio signal into an analog audio signal;
a speaker, coupled to said digital analog/audio controller, for playing a received analog audio signal;
a press key module, coupled to said digital audio/video signal processor, and provided for a user to input an operation instruction; and
a memory, coupled to said digital audio/video signal processor, for buffering an instruction and a data required for the operation of said digital audio/video signal processor.

2. The network digital image display apparatus of claim 1, further comprising a built-in Ethernet to powerline adapter, and said built-in Ethernet to powerline adapter comprising:
a power plug, plugged into an existing power socket at home or office;
an AC-to-DC regulator, coupled to said power plug, for receiving an AC power transmitted from said power plug, and converting said AC power into a DC power, and supplying said DC power to each chip and component in said webcam for their use;
a signal transformer, coupled to said power plug, for receiving an AC power transmitted from said power plug, and decoupling a low-power analog signal carried in said AC power;
an analog-to-digital signal converter, coupled to said signal transformer, for receiving a low-power analog signal transmitted from said signal transformer, and converting said low-power analog signal into a digital signal; and
a powerline networking chip, coupled to said analog-to-digital signal converter, for receiving a digital signal transmitted from said analog-to-digital signal converter, and converting said digital signal into a network packet.

3. The network digital image display apparatus of claim 1, further comprising:
a memory card interface, coupled to said digital audio/video signal processor, for inserting a memory card, such that said digital audio/video signal processor can read a digital image stored in said memory card and display said digital image on said display panel.

4. A network digital image display apparatus, comprising:
a network plug;
an Ethernet physical layer chip, coupled to said network plug, for receiving a network packet transmitted from said network plug;
a TCP/IP chip, coupled to said Ethernet physical layer chip, for receiving a network packet transmitted from said Ethernet physical layer chip, and
processing said network packet based on a Transmission Control Protocol (TCP) and an Internet Protocol (IP);
a digital audio/video signal processor, coupled to said TCP/IP chip, for receiving and processing a digital audio/video data transmitted from said TCP/IP chip stream;
a display panel, coupled to said digital audio/video signal processor, for displaying a received digital image;
a digital analog/audio controller, coupled to said digital audio/video signal processor, for converting a received digital audio signal into an analog audio signal;
a speaker, coupled to said digital analog/audio controller, for playing a received analog audio signal;
a press key module, coupled to said digital audio/video signal processor, and provided for a user to input an operation instruction;
a memory, coupled to said digital audio/video signal processor, for buffering an instruction and a data required for the operation of said digital audio/video signal processor; and
an AC-to-DC regulator, having a power plug installed at an end of said AC-to-DC regulator, for converting an AC power transmitted from said power plug into a DC power, and supplying said DC power to said components for their use.

5. The network digital image display apparatus of claim 4, further comprising:
a memory card interface, coupled to said digital audio/video signal processor, for inserting a memory card, such that said digital audio/video signal processor can read a digital image stored in said memory card and display said digital image on said display panel.

6. A plug-and-play network digital image display apparatus and an image monitoring system, and said system comprising:
a webcam, connected directly to Internet or another network device without requiring a support of any computer operating system;
a network digital image display apparatus, connected directly to Internet or another network device without requiring a support of any computer operating system; and
said webcam and said network digital image display apparatus, both being plugged separately into an existing power socket at home or office through a built-in or external Ethernet to powerline adapter, and coupled with each other by a powerline installed at home or office, such that video and audio signals captured by said webcam can be transmitted to said network digital image display apparatus through said powerline, and played by said network digital image display apparatus.

7. The system of claim 6, wherein said webcam comprises:
an image capturing chip, for capturing an image and converting said image into a signal of a YUV format;
an image encoding/decoding chip, for receiving a signal transmitted from said image capturing chip, and encoding said signal into an digital audio/video data stream of a predetermined format;
a dynamic random access memory, for receiving and buffering a digital audio/video data stream transmitted from said image encoding/decoding chip;
a microprocessor control unit (MCU) chip, for controlling the whole operation of said webcam and reading a digital audio/video data stream in said dynamic random access memory;
a random access memory, for buffering an instruction and a data required for the operation of said webcam;
a TCP/IP chip, for receiving a digital audio/video data stream transmitted from said microprocessor control unit (MCU) chip, and processing said digital audio/video data stream based on a Transmission Control Protocol (TCP) and an Internet Protocol (IP); and
an Ethernet physical layer chip, for receiving a data transmitted from said TCP/IP chip, and converting said data into a network packet, and sending out said network packet.

8. The system of claim 7, wherein said webcam further comprises a built-in Ethernet to powerline adapter, and said built-in Ethernet to powerline adapter comprises:
a power plug, plugged into an existing power socket at home or office;
an AC-to-DC regulator, coupled to said power plug, for receiving an AC power transmitted from said power plug, and converting said AC power into a DC power, and supplying said DC power to each chip and component in said webcam for their use;
a powerline networking chip, coupled to said Ethernet physical layer chip, for receiving a network packet transmitted from said Ethernet physical layer chip, and digitizing said network packet;
an analog-to-digital signal converter, coupled to said powerline networking chip, for receiving a digital signal transmitted from said powerline networking chip, and converting said digital signal into a low-power analog signal; and
a signal transformer, coupled separately to said analog-to-digital signal converter and power plug, for receiving a low-power analog signal transmitted from said analog-to-digital signal converter, and stacking and coupling said low-power analog signal on a waveform of said AC power, and sending out said AC power through said power plug.

9. The system of claim 6, wherein said webcam comprises:
an image capturing chip, for capturing an image, and converting said image into a signal of a YUV format;
an image encoding/decoding chip, for receiving a signal transmitted from said image capturing chip, and encoding said signal into a digital audio/video data stream of a predetermined format;
a dynamic random access memory, for receiving and buffering a digital audio/video data stream transmitted from said image encoding/decoding chip;
a microprocessor control unit (MCU) chip, for controlling the whole operation of said webcam, and reading a digital audio/video data stream in said dynamic random access memory;
a random access memory, for buffering an instruction and a data required for the operation of said webcam;
a TCP/IP chip, for receiving a digital audio/video data stream transmitted from said microprocessor control unit (MCU) chip, and processing said digital audio/video data stream based on a Transmission Control Protocol (TCP) and an Internet Protocol (IP);
an Ethernet physical layer chip, for receiving a data transmitted from said TCP/IP chip, and converting said data into a network packet; and
a network plug, coupled to said Ethernet physical layer chip, for sending out said network packet.

10. The system of claim 6, wherein said network digital image display apparatus comprises:
an Ethernet physical layer chip, for receiving network packet;
a TCP/IP chip, coupled to said Ethernet physical layer chip, for receiving a network packet transmitted from said Ethernet physical layer chip, and
processing said network packet based on a Transmission Control Protocol (TCP) and an Internet Protocol (IP);
a digital audio/video signal processor, coupled to said TCP/IP chip, for receiving and processing a digital audio/video data stream transmitted from said TCP/IP chip;
a display panel, coupled to said digital audio/video signal processor, for displaying a received digital image;
a digital analog/audio controller, coupled to said digital audio/video signal processor, for converting a received digital audio signal into an analog audio signal;
a speaker, coupled to said digital analog/audio controller, for playing a received analog audio signal;
a press key module, coupled to said digital audio/video signal processor, and provided for a user to input an operation instruction; and
a memory, coupled to said digital audio/video signal processor, for buffering an instruction and a data required for the operation of said digital audio/video signal processor.

11. The system of claim 10, wherein said network digital image display apparatus further comprises a built-in Ethernet to powerline adapter, and said built-in Ethernet to powerline adapter comprises:
a power plug, plugged into an existing power socket at home or office;
an AC-to-DC regulator, coupled to said power plug, for receiving an AC power transmitted from said power plug, and converting said AC power into a DC power, and supplying said DC power to each chip and component in said webcam for their use;
a signal transformer, coupled to said power plug, for receiving an AC power transmitted from said power plug, and decoupling a low-power analog signal carried in said AC power;
an analog-to-digital signal converter, coupled to said signal transformer, for receiving a low-power analog signal transmitted from said signal transformer, and converting said low-power analog signal into a digital signal; and
a powerline networking chip, coupled to said analog-to-digital signal converter, for receiving a digital signal transmitted from said analog-to-digital signal converter, and converting said digital signal into a network packet.

12. The system of claim 6, wherein said network digital image display apparatus comprises:
a network plug;
an Ethernet physical layer chip, coupled to said network plug, for receiving a network packet transmitted from said network plug;
a TCP/IP chip, coupled to said Ethernet physical layer chip, for receiving a network packet transmitted from said Ethernet physical layer chip, and
processing said network packet based on a Transmission Control Protocol (TCP) and an Internet Protocol (IP);
a digital audio/video signal processor, coupled to said TCP/IP chip, for receiving and processing a digital audio/video data stream transmitted from said TCP/IP chip;
a display panel, coupled to said digital audio/video signal processor, for displaying a received digital image;
a digital analog/audio controller, coupled to said digital audio/video signal processor, for converting a received digital audio signal into an analog audio signal;
a speaker, coupled to said digital analog/audio controller, for playing a received analog audio signal;
a press key module, coupled to said digital audio/video signal processor, and provided for a user to input an operation instruction; and
a memory, coupled to said digital audio/video signal processor, for buffering an instruction and a data required for the operation of said digital audio/video signal processor.

13. The system of claims 9 or 12, further comprising an external Ethernet to powerline adapter, and said external Ethernet to powerline adapter comprising:
a power plug, plugged into an existing power socket at home or office;
an AC-to-DC regulator, coupled to said power plug, for receiving an AC power transmitted from said power plug, and converting said AC power into a DC power, and supplying said DC power to each chip and component in said webcam for their use;
a signal transformer, coupled to said power plug, for receiving an AC power transmitted from said power plug, and decoupling a low-power analog signal carried in said AC power;
an analog-to-digital signal converter, coupled to said signal transformer, for receiving a low-power analog signal transmitted from said signal transformer, and converting said low-power analog signal into a digital signal;
a powerline networking chip, coupled to said analog-to-digital signal converter, for receiving a digital signal transmitted from said analog-to-digital signal converter, and converting said digital signal into a network packet; and
a network socket, coupled separately to said powerline networking chip and said network plug, for transmitting a network packet transmitted from said powerline networking chip to said network plug.

14. The system of claims 10 or 12, wherein said network digital image display apparatus further comprises:
a memory card interface, coupled to said digital audio/video signal processor, for inserting a memory card, such that said digital audio/video signal processor can read a digital image stored in said memory card and display said digital image on said display panel.

15. The system of claim 6, further comprising a router, with an end connected to Internet and another end plugged into an existing power socket at home or office through a powerline to Ethernet adapter, and using a powerline installed at home or office to connect said webcam with said network digital image display apparatus.

16. The system of claim 15, further comprising a network digital video recorder that can be connected directly to said router without requiring a support of any computer operating system, for storing video and audio signals captured by said webcam through said router.
